# EUROPÄISCHE PATENTANMELDUNG

(11) **EP 1 650 365 A1**
(43) Veröffentlichungstag der Anmeldung: **26.04.2006**
(21) Anmeldenummer: 05023084.6
(22) Anmeldetag: 21.10.2005
(51) Int. Cl.: E03C 1/33, F16B 5/06

(54) **Halterung zum Halten eines Einbaugeräts an einer Arbeitsplatte**

(30) Priorität: 22.10.2004 EP 04025111
(71) Anmelder: BLANCO GmbH + Co KG, 75038 Oberderdingen (DE)
(72) Erfinder: Elsinger, Bernd, 75056 Sulzfeld (DE); Osterroth, Michael, 68753 Waghäusel-Kirrlach (DE); Spruner von Mertz, Gert, 75031 Eppingen (DE)
(74) Vertreter: Hoeger, Stellrecht & Partner Patentanwälte

(57) **Zusammenfassung**

Um eine Halterung zum Halten eines Einbaugeräts, insbesondere einer Spüle (100), an einer Arbeitsplatte (114), umfassend ein einbaugeräteseitiges Halteelement (122) und ein arbeitsplattenseitiges Halteelement (124), wobei das einbaugeräteseitige Halteelement (122) und das arbeitsplattenseitige Halteelement (124) im montierten Zustand des Einbaugeräts miteinander zusammenwirken, um das Einbaugerät an der Arbeitsplatte (114) zu halten, und wobei das einbaugeräteseitige Halteelement (122) einen Haltebereich (128) mit mindestens einer Rückhaltestelle umfasst, an welcher das arbeitsplattenseitige Halteelement (124) im montierten Zustand des Einbaugeräts angreifen kann, um das einbaugeräteseitige Halteelement (122) in einer Rückhaltestellung zurückzuhalten, zu schaffen, das in einfacher Weise eine zuverlässige Halterung unter dichtem Anliegen des Einbaugeräts an der Arbeitsplatte ermöglicht, wird vorgeschlagen, dass der Haltebereich (128) des einbaugeräteseitigen Halteelements (122) eine Vielzahl von möglichen Rückhaltestellen umfasst, welche an dem Haltebereich (128) in unterschiedlichen, stufenlos aufeinanderfolgenden Höhenpositionen angeordnet sind.

## Beschreibung

Die vorliegende Erfindung betrifft eine Halterung zum Halten eines Einbaugeräts, insbesondere einer Spüle, an einer Arbeitsplatte, umfassend ein einbaugeräteseitiges Halteelement und ein arbeitsplattenseitiges Halteelement, wobei das einbaugeräteseitige Halteelement und das arbeitsplattenseitige Halteelement im montierten Zustand des Einbaugeräts miteinander zusammenwirken, um das Einbaugerät an der Arbeitsplatte zu halten, und wobei das einbaugeräteseitige Halteelement einen Haltebereich mit mindestens einer Rückhaltestelle umfasst, an welcher das arbeitsplattenseitige Halteelement im montierten Zustand des Einbaugeräts angreifen kann, um das einbaugeräteseitige Halteelement in einer Rückhaltestellung zurückzuhalten.

Eine solche Halterung zum Halten einer Einbauspüle an einer Arbeitsplatte ist beispielsweise aus der DE 195 17 868 C2 bekannt. Bei dieser bekannten Halterung ist das arbeitsplattenseitige Halteelement mit einer Sperrklinke versehen, und der Haltebereich des einbaugeräteseitigen Halteelements weist in dem Bereich, in dem die Sperrklinke angreift, eine Riffelung auf, so dass sich die Sperrklinke an in der vertikalen Richtung des einbaugeräteseitigen Halteelements voneinander beabstandeten Rückhaltestellen mit dem Haltebereich verhaken kann.

Mit dieser Halterung kann jedoch nicht in allen Fällen erreicht werden, dass der umlaufende äußere Rand der Einbauspüle überall ausreichend dicht an der Oberseite der Arbeitsplatte aufliegt.

Der vorliegenden Erfindung liegt die Aufgabe zugrunde, eine Halterung zum Halten eines Einbaugeräts, insbesondere einer Spüle, an einer Arbeitsplatte zu schaffen, das in einfacher Weise eine zuverlässige Halterung unter dichtem Anliegen des Einbaugeräts an der Arbeitsplatte ermöglicht.

Diese Aufgabe wird bei einer Halterung mit den Merkmalen des Oberbegriffs von Anspruch 1 erfindungsgemäß dadurch gelöst, dass der Haltebereich des einbaugeräteseitigen Halteelements eine Vielzahl von möglichen Rückhaltestellen umfasst, welche an dem Haltebereich in unterschiedlichen, stufenlos aufeinanderfolgenden Höhenpositionen angeordnet sind.

Dadurch, dass die Rückhaltestellen an dem Haltebereich stufenlos aufeinanderfolgen, kann das arbeitsplattenseitige Halteelement im montierten Zustand des Einbaugeräts an einer solchen Rückhaltestelle mit einer (innerhalb eines vorgegebenen Intervalls) stufenlos wählbaren Höhenposition angreifen, so dass die relative Stellung des Einbaugeräts zur Arbeitsplatte an jeder Stelle des Randes des Einbaugeräts optimal gewählt werden kann, ohne dass die Auswahl der möglichen Relativpositionen von Einbaugerät und Arbeitsplatte durch ein Raster voneinander beabstandeter Rückhaltestellen vorgegeben und auf diskrete Höhenstufen begrenzt ist, wie bei dem vorstehend beschriebenen Stand der Technik.

Insbesondere kann dann, wenn mehrere längs des Umfangs des Einbaugeräts voneinander beabstandete Halterungen zum Halten des Einbaugeräts an der Arbeitsplatte verwendet werden, die Relativposition des einbaugeräteseitigen Halteelements zu dem arbeitsplattenseitigen Halteelement längs der Vertikalen und somit die vertikale Relativposition zwischen Einbaugerät und Arbeitsplatte für jede dieser Halterungen individuell und stufenlos eingestellt werden, so dass auch Toleranzen in der Gestalt des Randes des Einbaugeräts oder Unebenheiten der Oberseite der Arbeitsplatte exakt ausgeglichen werden können.

Gemäß dem erfindungsgemäßen Konzept ist die Rückhaltestelle, an welcher das arbeitsplattenseitige Halteelement im montierten Zustand des Einbaugeräts tatsächlich an dem Haltebereich angreift, nicht schon vor der Montage des Einbaugeräts durch die Geometrie des Haltebereichs festgelegt, sondern geometrisch unbestimmt, und die Rückhaltestelle wird erst bei der Montage aus der Vielzahl stufenlos aufeinanderfolgender möglicher Rückhaltestellen ausgewählt.

Insbesondere können die möglichen Rückhaltestellen des Haltebereichs einen zusammenhängenden Abschnitt des Haltebereichs kontinuierlich überdecken.

Grundsätzlich ist die erfindungsgemäße Halterung zum Halten beliebiger Einbaugeräte, beispielsweise von Herdplatten, Kochmulden oder ähnlichem, an einer Arbeitsplatte geeignet.

Besonders geeignet ist die erfindungsgemäße Halterung zum Halten einer Spüle oder eines einzelnen Spülbeckens, die bzw. das von oben in eine Aufnahmeöffnung einer Arbeitsplatte eingesetzt wird, an dieser Arbeitsplatte.

Bei einer bevorzugten Ausgestaltung der Erfindung weist der Haltebereich keine mit dem arbeitsplattenseitigen Halteelement verrastbare Rastmittel auf.

Ferner ist vorzugsweise vorgesehen, dass der Haltebereich eine im wesentlichen glatte Oberfläche aufweist.

Der Haltebereich ist vorzugsweise strukturlos ausgebildet, so dass die Höhenposition der Rückhaltestelle, an welcher das arbeitsplattenseitige Halteelement im montierten Zustand des Einbaugeräts tatsächlich angreift, erst bei der Montage des Einbaugeräts an der Arbeitsplatte festgelegt wird.

Bei einer bevorzugten Ausgestaltung der Erfindung ist vorgesehen, dass der Haltebereich im montierten Zustand des Einbaugeräts zumindest abschnittsweise im wesentlichen vertikal ausgerichtet ist.

Um es zu erleichtern, dass das arbeitsplattenseitige Halteelement in den Haltebereich des einbaugeräteseitigen Halteelements an der Rückhaltestelle eindringt, um das einbaugeräteseitige Halteelement in der Rückhaltestellung zurückzuhalten, ist es von Vorteil, wenn der Haltebereich ein duktiles metallisches Material umfasst. Hierdurch wird insbesondere das Eindringen von Haltezähnen des arbeitsplattenseitigen Halteelements in den Haltebereich begünstigt.

Das einbaugeräteseitige Halteelement ist vorzugsweise einstückig ausgebildet.

Das arbeitsplattenseitige Halteelement kann das einbaugeräteseitige Halteelement durch Formschluss und/oder durch Reibschluss in der Rückhaltestellung zurückhalten.

Um eine zuverlässige Sicherung des einbaugeräteseitigen Halteelements in der Rückhaltestellung zu gewährleisten, ist es günstig, wenn das arbeitsplattenseitige Halteelement mindestens ein Rückhalteelement umfasst, das sich im montierten Zustand des Einbaugeräts in den Haltebereich eingräbt.

Dieses Rückhalteelement kann insbesondere mindestens einen Haltezahn umfassen.

Ferner hat es sich als günstig erwiesen, wenn das Rückhalteelement eine zu dem Haltebereich des einbaugeräteseitigen Halteelements hin gerichtete scharfe Kante, vorzugsweise einen zu dem Haltebereich hin gerichteten Stanzgrat, aufweist.

Vorzugsweise erstreckt sich das Rückhalteelement, beispielsweise eine Reihe von Haltezähnen, schräg oder sogar im wesentlichen senkrecht zur Horizontalen, um das Einführen des einbaugeräteseitigen Halteelements in das arbeitsplattenseitige Halteelement zu erleichtern.

Grundsätzlich kann das Rückhalteelement im montierten Zustand des Einbaugeräts auf der der Arbeitsplatte zugewandten oder auf der der Arbeitsplatte abgewandten Seite des Haltebereichs angeordnet sein.

Insbesondere kommt auch in Betracht, dass mindestens zwei Rückhalteelemente an dem arbeitsplattenseitigen Halteelement vorgesehen sind, von denen eines auf der der Arbeitsplatte zugewandten Seite und ein anderes auf der der Arbeitsplatte abgewandten Seite des Haltebereichs angeordnet ist.

Bei einer bevorzugten Ausgestaltung der Erfindung ist vorgesehen, dass das Rückhalteelement im montierten Zustand des Einbaugeräts zwischen dem Haltebereich des einbaugeräteseitigen Halteelements und der Arbeitsplatte angeordnet ist.

Um eine besonders hohe Rückhaltekraft zu erzielen, ist es günstig, wenn das Rückhalteelement an einer Rückhaltelasche angeordnet ist, die sich im montierten Zustand des Einbaugeräts schräg nach unten erstreckt.

Insbesondere kann vorgesehen sein, dass sich die Rückhaltelasche im montierten Zustand des Einbaugeräts zumindest abschnittsweise unter einem Winkel von ungefähr 20° bis ungefähr 40° zur Vertikalen nach unten erstreckt.

Um das Einbringen des einbaugeräteseitigen Halteelements in das arbeitsplattenseitige Halteelement zu erleichtern und zugleich das Hinausbewegen des einbaugeräteseitigen Halteelements aus dem arbeitsplattenseitigen Halteelement zu erschweren, kann vorgesehen sein, dass die Rückhaltelasche abgekröpft ist.

Insbesondere kann vorgesehen sein, dass die Rückhaltelasche eine Abkantung aufweist, an welcher ein erster Abschnitt der Rückhaltelasche und ein zweiter Abschnitt der Rückhaltelasche ineinander übergehen, wobei der erste Abschnitt der Rückhaltelasche im montierten Zustand des Einbaugeräts einen kleineren Winkel mit der Vertikalen einschließt als der zweite Abschnitt der Rückhaltelasche.

In diesem Fall ist das Rückhalteelement vorzugsweise an dem ersten Abschnitt der Rückhaltelasche angeordnet.

Vorzugsweise wird die Rückhaltelasche dadurch hergestellt, dass sie längs ihres unteren Randes und ihrer seitlichen Ränder aus dem Material eines Halteschenkels des arbeitsplattenseitigen Halteelements herausgetrennt, insbesondere herausgestanzt, wird und anschließend aus der Ebene dieses Halteschenkels herausgebogen wird, so dass in dem Halteschenkel ein Loch entsteht, welches vollständig vom Material des arbeitsplattenseitigen Halteelements umgeben ist.

Um einen sicheren Halt des Haltebereichs an dem Rückhalteelement zu gewährleisten, ist es von Vorteil, wenn das arbeitsplattenseitige Halteelement mindestens ein Andrückelement umfasst, das im montierten Zustand des Einbaugeräts den Haltebereich des einbaugeräteseitigen Halteelements gegen ein Rückhalteelement des arbeitsplattenseitigen Halteelements drückt.

Dieses Andrückelement ist vorzugsweise so ausgebildet, dass es nicht in den Haltebereich eindringt und somit bei der Montage des Einbaugeräts an der Arbeitsplatte keine bleibenden Veränderungen an der Oberfläche des Haltebereichs bewirkt.

Insbesondere kann vorgesehen sein, dass das Andrückelement eine Abkantung umfasst, mit welcher das arbeitsplattenseitige Halteelement im montierten Zustand des Einbaugeräts an dem Haltebereich des einbaugeräteseitigen Halteelements anliegt.

Vorzugsweise erstreckt sich das Andrückelement, beispielsweise die Abkantung, schräg zur Horizontalen, um das Einführen des einbaugeräteseitigen Halteelements in das arbeitsplattenseitige Halteelement zu erleichtern.

Grundsätzlich kann das Andrückelement im montierten Zustand des Einbaugeräts auf der der Arbeitsplatte zugewandten Seite oder auf der der Arbeitsplatte abgewandten Seite des Haltebereichs des einbaugeräteseitigen Halteelements angeordnet sein.

Bei einer bevorzugten Ausgestaltung der Erfindung ist vorgesehen, dass das Andrückelement im montierten Zustand des Einbaugeräts auf der der Arbeitsplatte abgewandten Seite des Haltebereichs des einbaugeräteseitigen Halteelements angeordnet ist.

Um das Einführen des einbaugeräteseitigen Halteelements in das arbeitsplattenseitige Halteelement zu erleichtern, ist es von Vorteil, wenn das Andrückelement an einer Andrücklasche angeordnet ist, die sich im montierten Zustand des Einbaugeräts zumindest abschnittsweise schräg nach unten erstreckt.

Bei einer bevorzugten Ausgestaltung der Erfindung ist vorgesehen, dass die Andrücklasche eine Abkantung umfasst, an welcher ein erster Abschnitt und ein zweiter Abschnitt der Andrücklasche ineinander übergehen, wobei der erste Abschnitt der Andrücklasche sich von der Abkantung aus schräg nach unten von dem Haltebereich des einbaugeräteseitigen Halteelements weg erstreckt und der zweite Abschnitt der Andrücklasche sich von der Abkantung aus schräg nach oben von dem Haltebereich des einbaugeräteseitigen Halteelements weg erstreckt.

Als besonders günstig hat es sich erwiesen, wenn der zweite Abschnitt der Andrücklasche an einer weiteren Abkantung in einen dritten Abschnitt der Andrücklasche übergeht, welche im montierten Zustand des Einbaugeräts einen größeren Winkel mit der Vertikalen einschließt als der zweite Abschnitt.

Dieser dritte Abschnitt dient zur Vorzentrierung des einbaugeräteseitigen Halteelements beim Einführen in das arbeitsplattenseitige Halteelement.

Insbesondere kann vorgesehen sein, dass sich der zweite Abschnitt der Andrücklasche im montierten Zustand des Einbaugeräts zumindest abschnittsweise unter einem Winkel von ungefähr 20° bis ungefähr 40° zur Vertikalen erstreckt.

Um das einbaugeräteseitige Halteelement bei der Montage des Einbaugeräts an der Arbeitsplatte problemlos in die richtige Einführposition relativ zu dem arbeitsplattenseitigen Halteelement bringen zu können, umfasst das arbeitsplattenseitige Halteelement vorzugsweise ein Vorzentrierelement zum Vorzentrieren des einbaugeräteseitigen Halteelements beim Einführen in das arbeitsplattenseitige Halteelement während der Montage des Einbaugeräts.

Dieses Vorzentrierelement kann insbesondere als eine sich im montierten Zustand des Einbaugeräts schräg nach unten erstreckende Vorzentrierlasche ausgebildet sein.

Als besonders günstig hat es sich erwiesen, wenn sich die Vorzentrierlasche im montierten Zustand des Einbaugeräts zumindest abschnittsweise unter einem Winkel von ungefähr 30° bis ungefähr 60° zur Vertikalen erstreckt.

Grundsätzlich kann das Vorzentrierelement im montierten Zustand des Einbaugeräts auf der der Arbeitsplatte zugewandten Seite oder auf der der Arbeitsplatte abgewandten Seite des einbaugeräteseitigen Halteelements angeordnet sein.

Vorzugsweise ist vorgesehen, dass das Vorzentrierelement im montierten Zustand des Einbaugeräts zwischen dem einbaugeräteseitigen Halteelement und der Arbeitsplatte angeordnet ist.

Um das Einbaugerät erforderlichenfalls in einfacher Weise wieder von der Arbeitsplatte lösen zu können, ist es günstig, wenn das arbeitsplattenseitige Halteelement mittels eines Demontagewerkzeugs, vorzugsweise zerstörungsfrei, von dem einbaugeräteseitigen Halteelement lösbar ist.

Hierbei kann insbesondere vorgesehen sein, dass das Demontagewerkzeug in direkten Kontakt mit dem einbaugeräteseitigen Halteelement bringbar ist, um beispielsweise das einbaugeräteseitige Halteelement direkt aus dem arbeitsplattenseitigen Halteelement herauszudrücken.

Das arbeitsplattenseitige Halteelement weist vorzugsweise eine Demontageöffnung zum Einführen eines solchen Demontagewerkzeugs auf.

Ferner kann vorgesehen sein, dass das arbeitsplattenseitige Halteelement eine Demontagelasche umfasst, mittels welcher das arbeitsplattenseitige Halteelement von dem einbaugeräteseitigen Halteelement lösbar ist.

Bei einer bevorzugten Ausgestaltung der Erfindung ist dabei vorgesehen, dass die Demontagelasche von einer Ruhestellung in eine Demontagestellung bewegbar ist und dabei einen an dem Haltebereich des einbaugeräteseitigen Halteelements anliegenden Bereich des arbeitsplattenseitigen Halteelements von dem Haltebereich weg bewegt.

Um ein Abbrechen oder Überbiegen der Demontagelasche zu vermeiden, ist es von Vorteil, wenn die Halterung einen die Bewegung der Demontagelasche bei der Demontage der Halterung begrenzenden Anschlag aufweist.

Dieser Anschlag kann beispielsweise als Kopf einer Befestigungsschraube oder als Sicke an dem arbeitsplattenseitigen Halteelement ausgebildet sein.

Das arbeitsplattenseitige Halteelement kann insbesondere einstückig ausgebildet sein.

Damit eine ausreichende Rückhaltekraft erzielt wird, mit welcher das arbeitsplattenseitige Halteelement das einbaugeräteseitige Halteelement in der Rückhaltestellung zurückhält, sollte das Material des arbeitsplattenseitigen Halteelements eine ausreichende Steifigkeit aufweisen.

Ferner sollte das Material des arbeitsplattenseitigen Halteelements eine ausreichende Elastizität aufweisen, insbesondere um eine ausreichende Vorspannung eines Andrückelements des arbeitsplattenseitigen Halteelements gegen den Haltebereich des einbaugeräteseitigen Halteelements zu erzielen.

Vorzugsweise ist daher vorgesehen, dass das arbeitsplattenseitige Halteelement einen elastischen metallischen Werkstoff umfasst.

Als Werkstoff kann insbesondere ein, vorzugsweise gehärteter, elastischer Federstrahl verwendet werden.

Besonders günstig ist es, wenn das arbeitsplattenseitige Halteelement vollständig aus dem elastischen metallischen Werkstoff gebildet ist.

Wenn das arbeitsplattenseitige Halteelement mindestens ein Rückhalteelement und mindestens ein Andrückelement umfasst, das im montierten Zustand des Einbaugeräts den Haltebereich des einbaugeräteseitigen Halteelements gegen das Rückhalteelement des arbeitsplattenseitigen Halteelements drückt, so liegen das Andrückelement und das Rückhalteelement einander vorzugsweise nicht exakt gegenüber, sondern sind im montierten Zustand der Halterung in vertikaler Richtung gegeneinander versetzt angeordnet. Das einbaugeräteseitige Halteelement ist dann beim Einschieben zwischen das Andrückelement und das Rückhalteelement dazu gezwungen, sich dieser versetzten Anordnung von Andrückelement und Rückhalteelement anzupassen. Aufgrund der gegeneinander versetzten Angriffspunkte des Andrückelements und des Rückhalteelements an dem Haltebereich des einbaugeräteseitigen Halteelements wird nach dem Kniehebelprinzip die Rückhaltekraft, die zum Herausbewegen des einbaugeräteseitigen Halteelements aus dem arbeitsplattenseitigen Halteelement erforderlich ist, deutlich erhöht; diese Rückhaltekraft kann durch das Kniehebelprinzip sogar vervielfacht werden.

Bei einer bevorzugten Ausgestaltung der Erfindung ist vorgesehen, dass das Andrückelement und das Rückhalteelement im montierten Zustand der Halterung in vertikaler Richtung um mindestens 0,5 mm gegeneinander versetzt angeordnet sind.

Ferner ist vorzugsweise vorgesehen, dass das Andrückelement und das Rückhalteelement im montierten Zustand der Halterung in vertikaler Richtung um höchstens 5 mm gegeneinander versetzt angeordnet sind.

Das Andrückelement und das Rückhalteelement, insbesondere die Abkantung des Andrückelements und die Zahnreihe des Rückhalteelements, können einander - in vertikaler Richtung gesehen - überlappen, so dass beispielsweise das freie Ende des Rückhalteelements weiter von einem Halteschenkel des arbeitsplattenseitigen Halteelements entfernt ist als das Andrückelement.

Alternativ hierzu kann auch vorgesehen sein, dass zwischen dem Andrückelement und dem Rückhalteelement - in vertikaler Richtung gesehen - ein Spalt angeordnet ist, dessen horizontale Ausdehnung höchstens der Dicke des Haltebereichs des einbaugeräteseitigen Halteelements entspricht. In diesem Fall ist beispielsweise das freie Ende des Rückhalteelements weniger weit von dem Halteschenkel entfernt als das Andrückelement.

Grundsätzlich könnte das Andrückelement im montierten Zustand der Halterung oberhalb oder unterhalb des Rückhalteelements angeordnet sein.

Als besonders günstig für die Erhöhung der Rückhaltekraft hat es sich jedoch erwiesen, wenn das Andrückelement im montierten Zustand der Halterung oberhalb des Rückhalteelements angeordnet ist.

Bei einer bevorzugten Ausgestaltung der Erfindung ist vorgesehen, dass das Andrückelement eine Abkantung umfasst, mit welcher das arbeitsplattenseitige Halteelement im montierten Zustand des Einbaugeräts an dem Haltebereich des einbaugeräteseitigen Halteelements anliegt, und dass das Rückhalteelement eine Reihe von Haltezähnen umfasst.

In diesem Fall ist es zur Nutzung des Kniehebelprinzips und damit zur Erhöhung der Rückhaltekraft besonders günstig, wenn die Abkantung und die Reihe von Haltezähnen im montierten Zustand der Halterung in vertikaler Richtung gegeneinander versetzt angeordnet sind.

Wenn das arbeitsplattenseitige Halteelement mindestens ein Rückhalteelement umfasst, so ist es günstig, wenn dieses Rückhalteelement im montierten Zustand des Einbaugeräts schräg zur Horizontalen, vorzugsweise unter einem Winkel von ungefähr 5° bis ungefähr 45° zur Horizontalen, verläuft. Durch diese Schrägstellung des Rückhalteelements wird eine stabile Anlagefläche für das einbaugeräteseitige Halteelement geschaffen, und ein Abknicken des einbaugeräteseitigen Halteelements bei der Montage und/oder bei der Demontage des Einbaugeräts wird somit verhindert.

Wenn das arbeitsplattenseitige Halteelement mindestens ein Andrückelement umfasst, das im montierten Zustand des Einbaugeräts den Haltebereich des einbaugeräteseitigen Halteelements gegen ein Rückhalteelement des arbeitsplattenseitigen Halteelements drückt, so ist es günstig, wenn dieses Andrückelement im eingebauten Zustand des Einbaugeräts schräg zur Horizontalen, vorzugsweise unter einem Winkel von ungefähr 5° bis ungefähr 45° zur Horizontalen, verläuft. Hierdurch wird auf der Seite des Andrückelements eine stabile Anlagefläche des einbaugeräteseitigen Halteelements geschaffen, wodurch ein Abknicken des einbaugeräteseitigen Halteelements bei der Montage und/oder bei der Demontage des Einbaugeräts verhindert wird.

Der vorliegenden Erfindung liegt die weitere Aufgabe zugrunde, eine Halterung zum Halten eines Einbaugeräts, insbesondere einer Spüle, an einer Arbeitsplatte zu schaffen, bei welcher das einbaugeräteseitige Halteelement von dem arbeitsplattenseitigen Halteelement mit einer besonders hohen Rückhaltekraft zurückgehalten wird.

Diese Aufgabe wird bei einer Halterung mit den Merkmalen des Oberbegriffs von Anspruch 43 erfindungsgemäß dadurch gelöst, dass das arbeitsplattenseitige Halteelement mindestens ein Rückhalteelement und mindestens ein Andrückelement umfasst, das im montierten Zustand des Einbaugeräts den Haltebereich des einbaugeräteseitigen Halteelements gegen das Rückhalteelement des arbeitsplattenseitigen Halteelements drückt, wobei das Andrückelement und das Rückhalteelement im montierten Zustand der Halterung in vertikaler Richtung gegeneinander versetzt angeordnet sind.

Anspruch 44 ist auf eine Kombination aus einem Einbaugerät, insbesondere einer Spüle, und mindestens einer erfindungsgemäßen Halterung gerichtet.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Querschnitt durch einen Randbereich einer Einbauspüle, ein spülenseitiges Halteelement und ein arbeitsplattenseitiges Halteelement, durch welches die Spüle an einer Arbeitsplatte gehalten ist;
- Fig. 2: eine schematische perspektivische Darstellung des arbeitsplattenseitigen Halteelements, von der Seite eines Andrückschenkels des arbeitsplattenseitigen Halteelements aus gesehen;
- Fig. 3: eine schematische perspektivische Darstellung des arbeitsplattenseitigen Halteelements, von der Seite eines Halteschenkels des arbeitsplattenseitigen Halteelements aus gesehen;
- Fig. 4: eine schematische Seitenansicht des arbeitsplattenseitigen Halteelements;
- Fig. 5: eine schematische Rückansicht des arbeitsplattenseitigen Halteelements;
- Fig. 6: eine schematische Vorderansicht des arbeitsplattenseitigen Halteelements;
- Fig. 7: eine schematische Draufsicht von oben auf das arbeitsplattenseitige Halteelement;
- Fig. 8: eine schematische Draufsicht von unten auf das arbeitsplattenseitige Halteelement;
- Fig. 9: einen schematischen Querschnitt durch den Randbereich der Einbauspüle, das spülenseitige Halteelement und das arbeitsplattenseitige Halteelement in einer Anfangsphase eines Demontagevorgangs, bei dem ein Demontagewerkzeug in das arbeitsplattenseitige Halteelement eingeführt wird;
- Fig. 10: einen schematischen Querschnitt durch den Randbereich der Einbauspüle, das spülenseitige Halteelement und das arbeitsplattenseitige Halteelement in einer Endphase eines Demontagevorgangs, nachdem das spülenseitige Halteelement mittels des Demontagewerkzeugs aus dem arbeitsplattenseitigen Halteelement herausgedrückt worden ist;
- Fig. 11: einen schematischen Querschnitt durch einen Randbereich einer Einbauspüle, ein spülenseitiges Halteelement und eine zweite Ausführungsform eines arbeitsplattenseitigen Halteelements, durch welches die Spüle an einer Arbeitsplatte gehalten ist;
- Fig. 12: eine schematische perspektivische Darstellung der zweiten Ausführungsform eines arbeitsplattenseitigen Halteelements, von der Seite eines Andrückschenkels des arbeitsplattenseitigen Halteelements aus gesehen;
- Fig. 13: eine schematische Seitenansicht der zweiten Ausführungsform eines arbeitsplattenseitigen Halteelements;
- Fig. 14: einen schematischen Querschnitt durch den Randbereich der Einbauspüle, das spülenseitige Halteelement und die zweite Ausführungsform eines arbeitsplattenseitigen Halteelements in einer Anfangsphase eines Demontagevorgangs, bei dem ein Demontagewerkzeug gegen eine Demontagelasche des arbeitsplattenseitigen Halteelements bewegt wird;
- Fig. 15: einen schematischen Querschnitt durch den Randbereich der Einbauspüle, das spülenseitige Halteelement und die zweite Ausführungsform des arbeitsplattenseitigen Halteelements in einer Endphase des Demontagevorgangs, nachdem das spülenseitige Halteelement durch das Deformationswerkzeug mittels der Deformationslasche aus dem arbeitsplattenseitigen Halteelement gelöst worden ist;
- Fig. 16: eine schematische Seitenansicht einer dritten Ausführungsform eines arbeitsplattenseitigen Halteelements;
- Fig. 17: eine schematische Vorderansicht der dritten Ausführungsform eines arbeitsplattenseitigen Halteelements; und
- Fig. 18: einen schematischen Querschnitt durch die dritte Ausführungsform des arbeitsplattenseitigen Halteelements und des spülenseitigen Halteelements, nachdem das spülenseitige Halteelement bei der Montage der Einbauspüle zwischen ein Rückhalteelement und ein Andrückelement des arbeitsplattenseitigen Halteelements eingeschoben worden ist.

Gleiche oder funktional äquivalente Elemente sind in allen Figuren mit denselben Bezugszeichen bezeichnet.

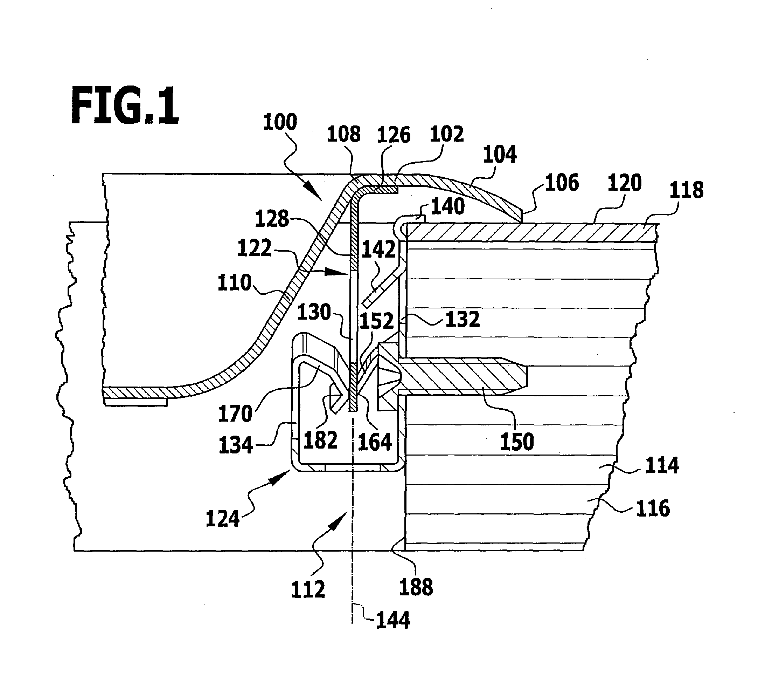

Ein in Fig. 1 ausschnittsweise dargestelltes und beispielsweise als Spüle 100 ausgebildetes Einbaugerät umfasst einen umlaufenden, im montierten Zustand der Spüle 100 im wesentlichen horizontal ausgerichteten, im wesentlichen ebenen Randbereich 102, der über einen gekrümmten Randbereich 104 mit einem umlaufenden äußeren Rand 106 der Spüle 100 verbunden ist.

An seinem dem äußeren Rand 106 abgewandten inneren Rand geht der ebene Randbereich 102 über einen (von der Oberseite der Spüle 100 aus gesehen) konvex gekrümmten Übergangsbereich 108 in eine, beispielsweise gegen die Vertikale geneigte, Wand 110 eines Funktionsbereichs der Spüle 100, beispielsweise eines Abtropfbereichs oder eines Beckens der Spüle 100, über.

Die Spüle 100 kann grundsätzlich aus einem beliebigen Material hergestellt sein.

Vorzugsweise ist die Spüle 100 aus einem metallischen Material, vorzugsweise aus einem Stahlmaterial, insbesondere aus einem Chrom-Nickel-Stahl, gebildet.

Die Spüle 100 ist von oben in eine der Außenkontur der Spüle 100 angepasste Aufnahmeöffnung 112 in einer Arbeitsplatte 114 eingesetzt.

Dabei kann die Arbeitsplatte 114, wie in Fig. 1 dargestellt, beispielsweise aus einer dicken Spanplatte 116 und einer mit der Spanplatte 116 verklebten, die Spanplatte 116 nach oben hin abdeckenden dünnen Abdeckplatte 118 zusammengesetzt sein.

Dabei liegt der äußere Rand 106 der Spüle 100 von oben an der Oberseite 120 der Arbeitsplatte 114 an.

Um die Spüle 100 so an der Arbeitsplatte 114 festzulegen, dass sie nicht mehr nach oben aus der Aufnahmeöffnung 112 entnommen werden kann, sind am ebenen Randbereich 102 und am Übergangsbereich 108 der Spüle 100 mehrere, in der Längsrichtung des Randbereichs 102 voneinander beabstandete spülenseitige Halteelemente 122 festgelegt, welche mit jeweils einem arbeitsplattenseitigen Halteelement 124 so zusammenwirken, dass die Spüle 100 gegen die Arbeitsplatte 114 verspannt ist.

Jedes der spülenseitigen Halteelemente 122 weist die Form eines im wesentlichen L-förmigen Haltewinkels auf, wobei der kurze, im montierten Zustand der Spüle 100 im wesentlichen horizontal ausgerichtete Schenkel des Haltewinkels zusammen mit dem zwischen dem kurzen und dem langen Schenkel des Haltewinkels angeordneten gekrümmten Übergangsbereich einen Anlagebereich 126 und der untere Endbereich des langen, im montierten Zustand der Spüle 100 im wesentlichen vertikal ausgerichteten Schenkels des Haltewinkels einen Haltebereich 128 des spülenseitigen Halteelements 122 bildet.

Mit dem Anlagebereich 126 liegt jedes der spülenseitigen Halteelemente 122 flächig an der Unterseite des ebenen Randbereichs 102 und des Übergangsbereichs 108 der Spüle 100 an und ist dort, beispielsweise durch Verschweißung, insbesondere Laserverschweißung, und/oder durch Verklebung dauerhaft festgelegt.

Oberhalb des Haltebereichs 128 des spülenseitigen Halteelements 122 kann der lange Schenkel des Haltewinkels eine, beispielsweise ungefähr mittige, Durchtrittsöffnung 130 aufweisen, die jedoch außer einer Material- und Gewichtsersparnis bei der hier zu beschreibenden Ausführungsform einer Spülenhalterung keine Funktion hat.

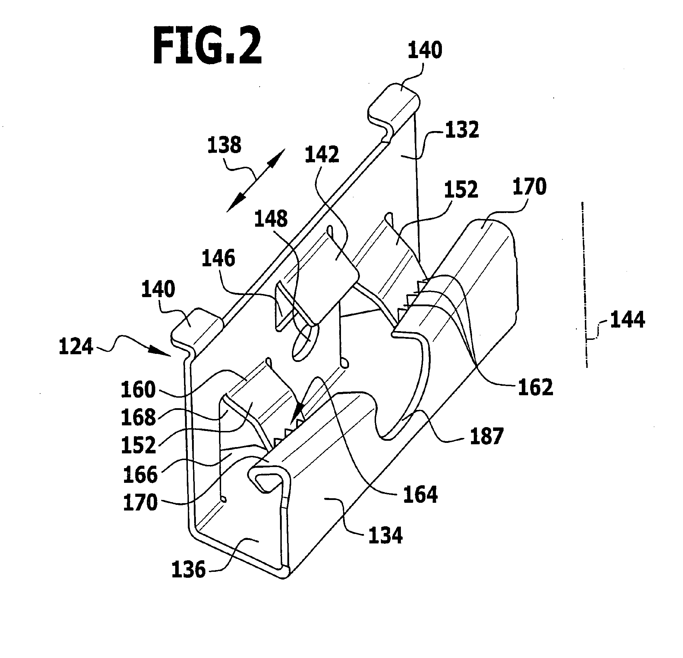

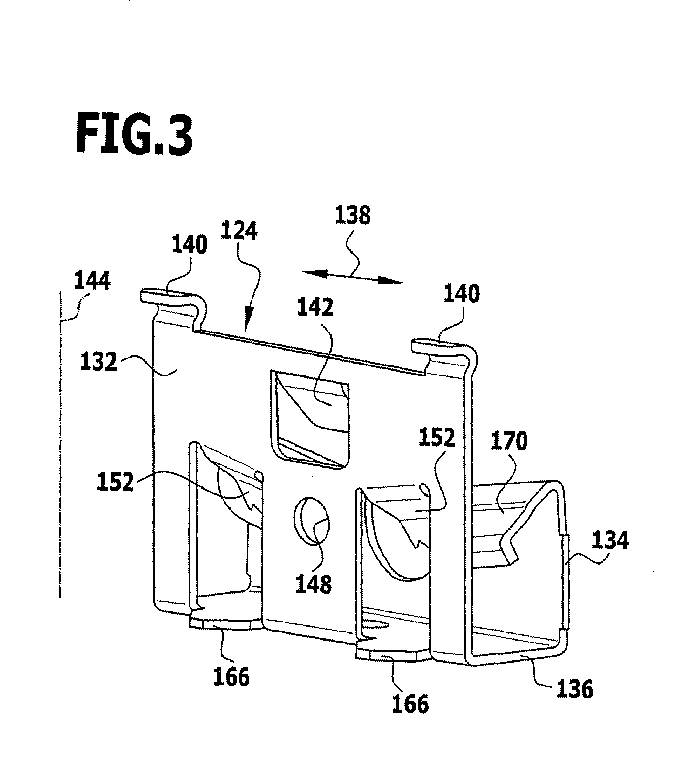

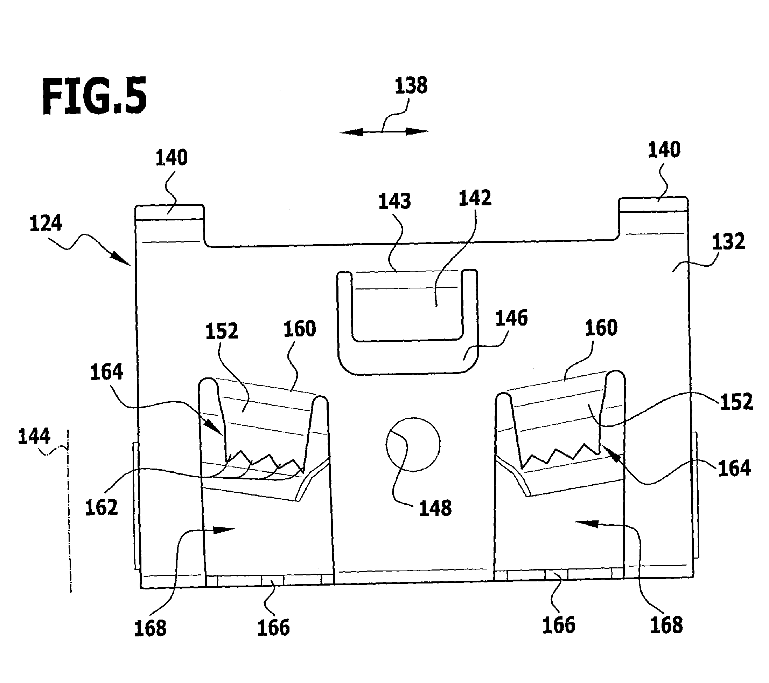

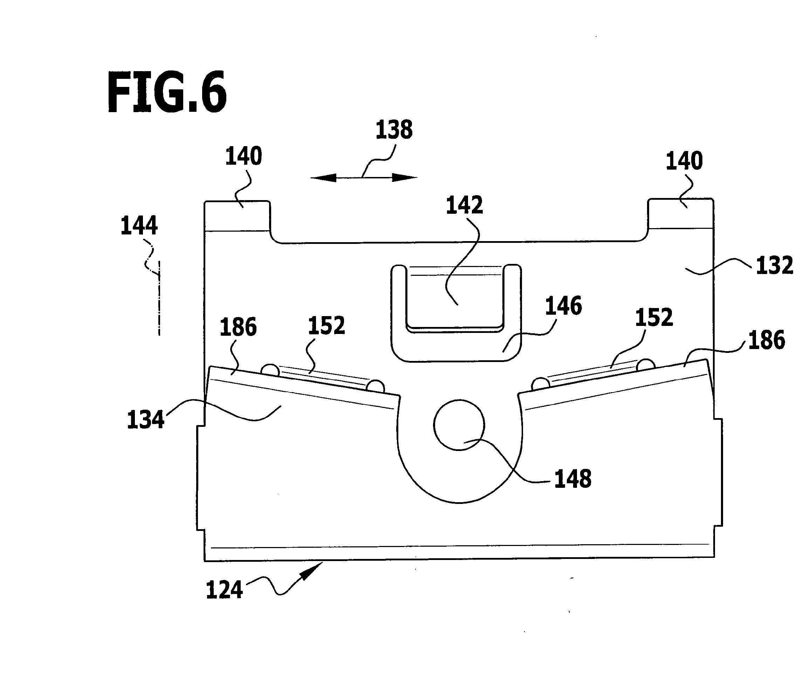

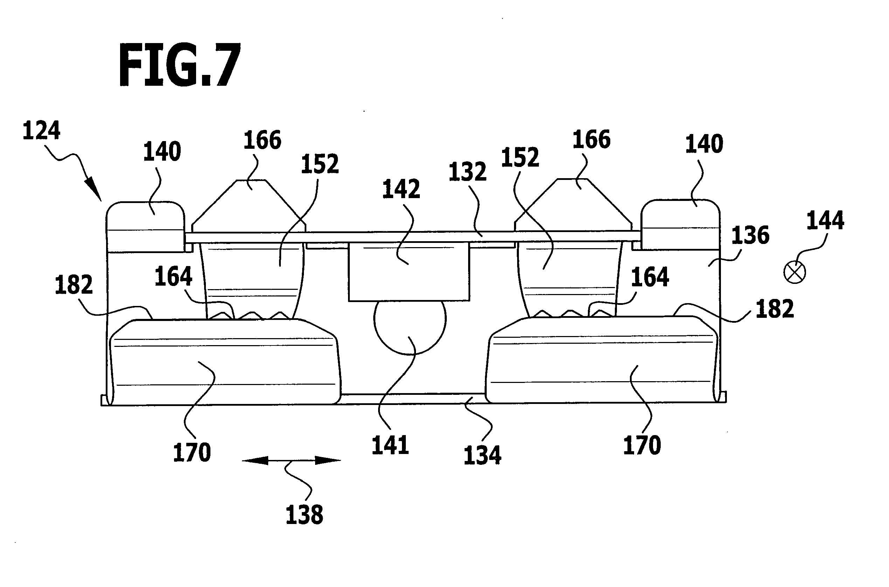

Das arbeitsplattenseitige Halteelement 124, welches im montierten Zustand der Spüle 100 so an dem Haltebereich 128 des spülenseitigen Halteelements 122 angreift, dass das spülenseitige Halteelement 122 in der in Fig. 1 dargestellten Haltestellung zurückgehalten wird, ist im einzelnen in den Fig. 2 bis 8 dargestellt.

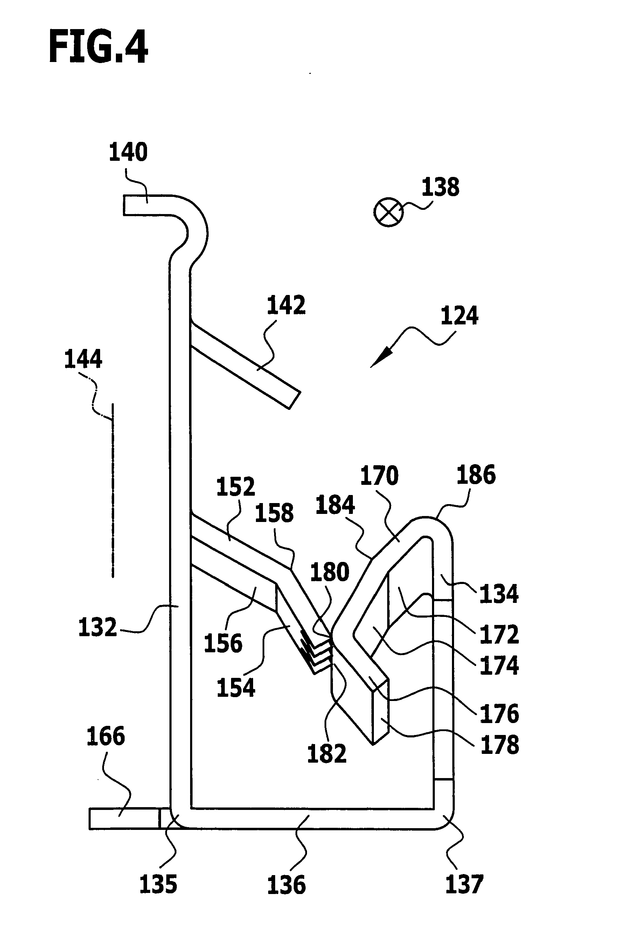

Wie am besten aus der Seitenansicht der Fig. 4 zu ersehen ist, weist das arbeitsplattenseitige Halteelement 124 die Gestalt einer Klammer und einen im wesentlichen U-förmigen Querschnitt auf, mit einem arbeitsplattenseitigen Halteschenkel 132, einem dem Halteschenkel 132 gegenüberliegenden, auf der der Arbeitsplatte 114 abgewandten Seite des Halteschenkels 132 angeordneten Andrückschenkel 134 und einem die unteren Enden des Halteschenkels 132 und des Andrückschenkels 134 miteinander verbindenden Steg 136.

Der Halteschenkel 132 und der Andrückschenkel 134 gehen jeweils an einer Abkantung 135 bzw. 137 in den Steg 136 über.

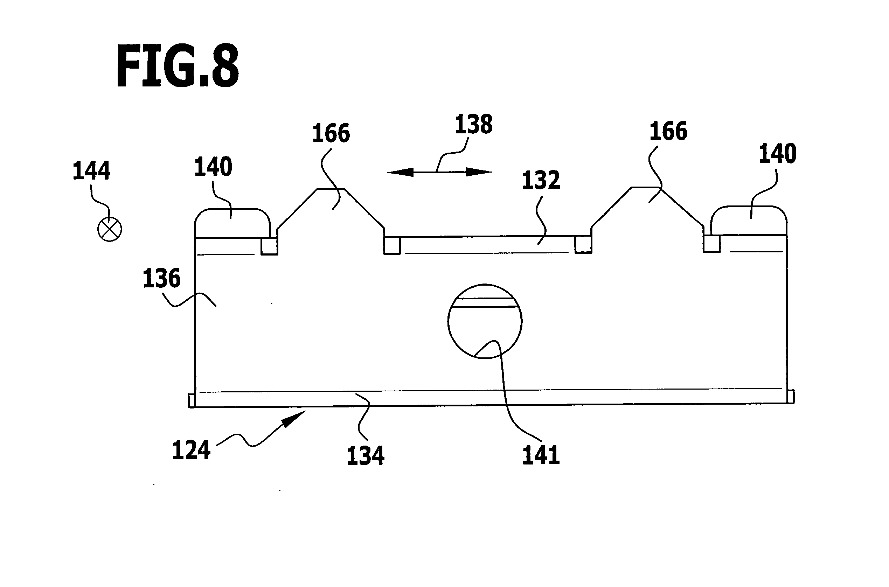

Wie am besten aus Fig. 8 zu ersehen ist, ist der Steg 136 mit einem mittigen Demontageloch 141 versehen.

Am oberen Rand des Halteschenkels 132 sind zwei gebogene, in der Längsrichtung 138 des arbeitsplattenseitigen Halteelements 124 voneinander beabstandete Anschlaglaschen 140 angeordnet, mit deren Unterseite das arbeitsplattenseitige Halteelement 124 im montierten Zustand auf der Oberseite 120 der Arbeitsplatte 114 aufliegt (siehe Fig. 1).

Zwischen den beiden Anschlaglaschen 140 und von dem oberen Rand des arbeitsplattenseitigen Halteelements 124 nach unten beabstandet ist eine Vorzentrierlasche 142 angeordnet, welche sich unter einem Winkel von ungefähr 30° bis ungefähr 60°, vorzugsweise von ungefähr 45°, gegen die Vertikale 144 schräg nach unten in Richtung auf den Andrückschenkel 134 erstreckt.

Diese Vorzentrierlasche 142 ist dadurch gebildet, dass sie längs ihres unteren Randes und ihrer seitlichen Ränder von dem übrigen Material des Halteschenkels 132 abgetrennt und um ihren oberen Rand längs einer Abkantung 143 aus der Ebene des Halteschenkels 132 herausgebogen wurde.

Durch das Herausbiegen der Vorzentrierlasche 142 ist in dem Halteschenkel 132 ein im wesentlichen rechteckiges Durchgangsloch 146 zurückgeblieben.

Unterhalb des Durchgangslochs 146 ist ein im wesentlichen mittiges, im wesentlichen kreisrundes Befestigungsloch 148 für den Durchtritt eines Befestigungsmittels, beispielsweise einer Befestigungsschraube 150 (siehe Fig. 1), vorgesehen.

An dem Halteschenkel 132 sind ferner zwei in der Längsrichtung 138 des arbeitsplattenseitigen Halteelements 124 voneinander beabstandete, auf den beiden einander gegenüberliegenden Seiten des Befestigungslochs 148 befindliche Rückhaltelaschen 152 angeordnet.

Wie am besten aus der Seitenansicht der Fig. 4 zu ersehen ist, umfasst jede der Rückhaltelaschen 152 einen unteren ersten Abschnitt 154, der unter einem Winkel von ungefähr 20° bis ungefähr 40° gegen die Vertikale 144 verläuft, und einen oberen zweiten Abschnitt 156, welcher längs einer ersten Abkantung 158 in den ersten Abschnitt 154 übergeht und mit der Vertikalen einen größeren Winkel einschließt als der erste Abschnitt 154, nämlich einen Winkel im Bereich von ungefähr 50° bis ungefähr 70°.

Der zweite Abschnitt 156 geht längs einer zweiten Abkantung 160 in den Halteschenkel 132 über.

Der erste Abschnitt 154 jeder Rückhaltelasche 152 ist an seinem dem zweiten Abschnitt 156 abgewandten unteren Rand mit mehreren, beispielsweise mit jeweils vier, Haltezähnen 162 versehen, welche zusammen ein Rückhalteelement 164 des arbeitsplattenseitigen Halteelements 124 bilden.

Die Rückhaltelaschen 152 werden dadurch hergestellt, dass sie längs ihrer unteren und seitlichen Ränder von dem übrigen Material des Halteschenkels 132 abgetrennt werden, anschließend jede Haltelasche 152 längs der zweiten Abkantung 160 aus der Ebene des Halteschenkels 132 herausgebogen wird und anschließend der erste Abschnitt 154 längs der ersten Abkantung 158 nach unten aus der Ebene des zweiten Abschnitts 156 herausgebogen wird.

Wie am besten aus der Seitenansicht der Fig. 4 und aus der perspektivischen Darstellung der Fig. 2 zu ersehen ist, verlaufen die Abkantungen 158 und 160 nicht horizontal, sondern sind zu dem Befestigungsloch 148 hin etwas nach unten geneigt.

Ferner ist das arbeitsplattenseitige Halteelement 124 mit zwei Einschlagzacken 166 versehen, welche jeweils unterhalb einer der Rückhaltelaschen 152 angeordnet sind, in der Längsrichtung 138 des arbeitsplattenseitigen Halteelements 124 voneinander beabstandet sind und in der Ebene des Stegs 136 von dessen halteschenkelseitigem hinterem Rand aus nach hinten, d.h. im montierten Zustand zu der Arbeitsplatte 114 hin, vorstehen.

Zwischen jeweils einer Rückhaltelasche 152 und jeweils einer Einschlagzacke 166 ist in dem Halteschenkels 132 ein Durchgangsloch 168 vorhanden, welches durch das Heraustrennen des Materials der Rückhaltelasche 152 und der Einschlagzacke 166 aus dem Material des Halteschenkels 132 entstanden ist.

Jeder der Rückhaltelaschen 152 liegt jeweils eine Andrücklasche 170 gegenüber, welche einen unteren ersten Abschnitt 172, einen mittleren zweiten Abschnitt 174 und einen oberen dritten Abschnitt 176 umfasst.

Der untere erste Abschnitt 172 jeder Andrücklasche 170 erstreckt sich unter einem Winkel von ungefähr 30° bis ungefähr 50° zur Vertikalen 144 schräg nach unten in Richtung auf den Andrückschenkel 134 und endet an einem im wesentlichen geraden, zur Mitte des arbeitsplattenseitigen Halteelements 124 hin nach unten geneigten unteren Rand 178, der tiefer liegt als die Haltezähne 162 der gegenüberliegenden Rückhaltelasche 152.

An seinem oberen Rand geht der untere erste Abschnitt 172 an einer ersten Abkantung 180 in den mittleren zweiten Abschnitt 174 über.

Die erste Abkantung 180 liegt auf derselben Höhe wie die Haltezähne 162 der jeweils gegenüberliegenden Rückhaltelasche 152 und ist ebenso wie der untere Rand der gegenüberliegenden Rückhaltelasche 152 zur Mitte des arbeitsplattenseitigen Halteelements 124 hin nach unten geneigt.

Die erste Abkantung 180 der Andrücklasche 170 ist aufgrund der elastischen Eigenschaften des Materials des arbeitsplattenseitigen Halteelements 124 zu der gegenüberliegenden Rückhaltelasche 152 hin vorgespannt und bildet ein Andrückelement 182 der Andrücklasche 170.

Der mittlere zweite Abschnitt 174 der Andrücklasche 170 erstreckt sich von der ersten Abkantung 180 aus unter einem Winkel von ungefähr 20° bis ungefähr 40° zur Vertikalen 144 schräg nach oben, in der Richtung von dem Halteschenkel 132 weg.

An seinem oberen Rand geht der mittlere zweite Abschnitt 174 an einer zweiten Abkantung 184 in den oberen dritten Abschnitt 176 der Andrücklasche 170 über.

Auch die zweite Abkantung 184, die im wesentlichen parallel zur ersten Abkantung 180 verläuft, ist zur Mitte des arbeitsplattenseitigen Halteelements 124 hin nach unten geneigt.

Der obere dritte Abschnitt 176 der Andrücklasche 170 erstreckt sich von der zweiten Abkantung 184 aus schräg nach oben, in der Richtung von dem Halteschenkel 132 weg, und schließt mit der Vertikalen 144 einen Winkel von ungefähr 40° bis ungefähr 50° ein, welcher größer ist als der Winkel, den der mittlere zweite Abschnitt 174 der Andrücklasche 170 mit der Vertikalen 144 einschließt.

An seinem oberen Rand geht der obere dritte Abschnitt 176 der Andrücklasche 170 an einer dritten Abkantung 186 in den im wesentlichen vertikalen Andrückschenkel 134 des arbeitsplattenseitigen Halteelements 124 über.

Zwischen den beiden Andrücklaschen 170 ist an dem Andrückschenkel 134 eine Ausnehmung 187 vorhanden, um die Beweglichkeit der Andrücklaschen 170 zu gewährleisten.

Das gesamte arbeitsplattenseitige Halteelement 124 ist einstückig ausgebildet.

Es wird vorzugsweise aus einem elastischen metallischen Werkstoff, insbesondere aus einem elastischen Federstahl, vorzugsweise aus einem gehärteten elastischen Federstahl, hergestellt.

Das spülenseitige Halteelement 122 ist vorzugsweise aus einem duktilen metallischen Material hergestellt. Hierdurch wird das Eindringen der Haltezähne 162 der Rückhaltelaschen 152 in den Haltebereich 128 des spülenseitigen Halteelements 122 erleichtert.

Insbesondere kann das spülenseitige Halteelement 122 aus dem feritischen Edelstahl mit der Werkstoffnummer 1.4016 hergestellt sein.

Das spülenseitige Halteelement 122 kann aus einem Blech eines duktilen metallischen Materials durch Ausstanzen der Außenkontur und anschließendes Biegen in dem gekrümmten, die beiden Schenkel des spülenseitigen Halteelements 122 miteinander verbindenden gekrümmten Bereich gebildet werden.

Zur Montage der Spüle 100 mit den daran durch Verschweißung oder Verklebung festgelegten spülenseitigen Halteelementen 122 in der Aufnahmeöffnung 112 der Arbeitsplatte 114 wird wie folgt vorgegangen:

Zunächst werden mehrere arbeitsplattenseitige Halteelemente 124 an dem die Aufnahmeöffnung 112 umgebenden Rand 188 der Arbeitsplatte 114 festgelegt.

Hierzu wird jedes arbeitsplattenseitige Halteelement 124 mit seinen beiden Anschlaglaschen 140 auf die Oberseite 120 der Arbeitsplatte 114 aufgelegt, um das arbeitsplattenseitige Halteelement 124 auszurichten.

Anschließend werden die beiden Einschlagzacken 166 des arbeitsplattenseitigen Halteelements 124 mittels gegen das arbeitsplattenseitige Halteelement 124 geführter Hammerschläge in die Arbeitsplatte 114 eingetrieben, bis der Halteschenkel 132 des arbeitsplattenseitigen Halteelements 124 an dem Rand 188 der Arbeitsplatte 114 flächig anliegt. Hierdurch wird das arbeitsplattenseitige Halteelement 124 an der Arbeitsplatte 114 fixiert und grob befestigt.

Anschließend wird das arbeitsplattenseitige Halteelement 124 in seiner Position an der Arbeitsplatte 114 mittels einer durch das Befestigungsloch 148 hindurchgeführten und in die Spanplatte 116 eingedrehten Befestigungsschraube 150 gesichert.

Ist die je nach Spülenmodell benötigte Anzahl von arbeitsplattenseitigen Halteelementen 124 am Rand 188 der Arbeitsplatte 114 befestigt, wird die Spüle 100 von oben in die Aufnahmeöffnung 112 eingesetzt.

Befindet sich bei dieser Einsetzbewegung der Haltebereich 128 eines der an der Unterseite der Spüle 100 festgelegten spülenseitigen Halteelemente 122 zu nahe am Rand 188 der Arbeitsplatte 114, so trifft der betreffende Haltebereich 128 auf die Vorzentrierlasche 142 eines arbeitsplattenseitigen Halteelements 124 und gleitet längs der Oberseite der Vorzentrierlasche 142 nach innen, d.h. in der von der Arbeitsplatte 114 weg führenden Richtung, ab, so dass die Spüle 100 insgesamt in eine korrekte Einführposition vorzentriert wird, in welcher die Haltebereiche 128 der spülenseitigen Halteelemente 122 im wesentlichen senkrecht über den Haltezähnen 162 der Rückhaltelaschen 152 und über den ersten Abkantungen 180 der Andrücklaschen 170 des jeweils zugeordneten arbeitsplattenseitigen Halteelements 124 liegen.

Wird die Spüle 100 in dieser Einführposition im wesentlichen vertikal weiter nach unten bewegt, so spreizen die Haltebereiche 128 der an der Spüle 100 festgelegten spülenseitigen Halteelemente 122, die walzblank und nicht strukturiert sind, die Rückhaltelaschen 152 und die gegen dieselben vorgespannten Andrücklaschen 170 der arbeitsplattenseitigen Halteelemente 124 leicht auf, so dass die Haltebereiche 128 an den Haltezähnen 162 vorbeigleiten können, bis die Montageendposition der Spüle 100 erreicht ist, in welcher die Spüle 100 längs ihres äußeren Randes 106 überall abdichtend auf der Oberseite 120 der Arbeitsplatte 114 aufliegt.

In dieser (in Fig. 1 dargestellten) Montageendstellung, in welcher die Relativbewegung zwischen den Haltebereichen 128 und den Rückhaltelaschen 152 der arbeitsplattenseitigen Halteelemente 124 angehalten wird, graben sich die Haltezähne 162 der Rückhaltelaschen 152 in die zuvor im wesentlichen glatten Oberflächen der Haltebereiche 128 ein, so dass die Haltezähne 162 keine Rückwärtsbewegung der Haltebereiche 128 und somit der Spüle 100 vertikal nach oben zulassen.

Die Rückhaltestelle, an welcher sich die Haltezähne 162 in den jeweiligen Haltebereich 128 eingraben, kann an beliebiger Stelle und insbesondere in beliebiger Höhe, d.h. in beliebigem Abstand von dem Anlagebereich 126 des einbaugeräteseitigen Halteelements 122, an dem Haltebereich 128 angeordnet sein.

Auf diese Weise kann die Spüle 100 dauerhaft und stufenlos an der Arbeitsplatte 114 montiert werden.

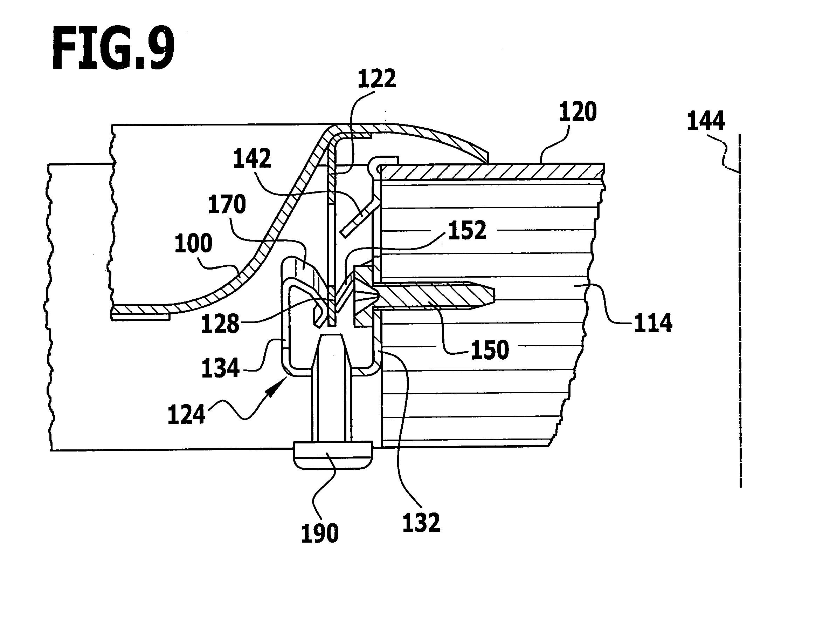

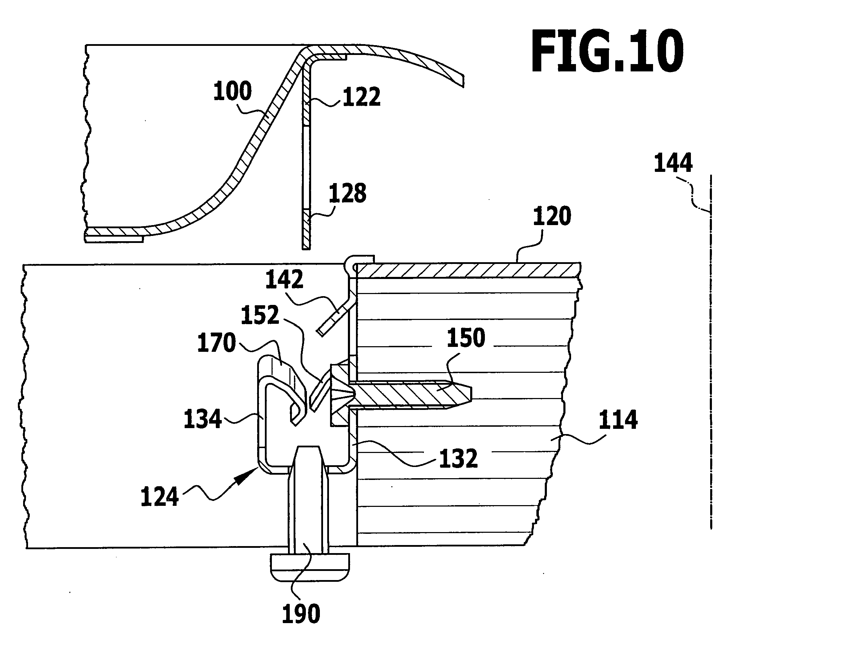

Die Demontage der Spüle 100 von der Arbeitsplatte 114 wird im folgenden unter Bezugnahme auf die Fig. 9 und 10 beschrieben:

Zur Demontage der Spüle 100 wird eine Demontageschraube 190 verwendet, welche von unten durch das Demontageloch 141 im Steg 136 des arbeitsplattenseitigen Halteelements 124 in den Bereich zwischen dem Halteschenkel 132 und dem Andrückschenkel 134 des arbeitsplattenseitigen Halteelements 124 eingeführt wird, bis das obere Ende der Demontageschraube 190 auf das untere Ende des Haltebereichs 128 des spülenseitigen Halteelements 122 trifft und den Haltebereich 128 durch direkte Einwirkung aus dem Spalt zwischen den Rückhaltelaschen 152 und den Andrücklaschen 170 des arbeitsplattenseitigen Halteelements 124 herausdrückt und somit von dem arbeitsplattenseitigen Halteelement 124 löst.

Nachdem auf diese Weise die spülenseitigen Halteelemente 122 der Spüle 100 von allen arbeitsplattenseitigen Halteelementen 124, an denen sie gehalten waren, gelöst worden sind, kann die Spüle 100 ohne weiteres nach oben aus der Aufnahmeöffnung 112 der Arbeitsplatte 114 entnommen werden (siehe Fig. 10).

Eine spätere erneute Montage der Spüle 100 an der Arbeitsplatte 114 ist unter Verwendung derselben spülenseitigen Halteelemente 122 und arbeitsplattenseitigen Halteelemente 124 ohne weiteres möglich, da die spülenseitigen Halteelemente 122 und die arbeitsplattenseitigen Halteelemente 124 bei der Demontage der Spüle 100 nicht beschädigt werden.

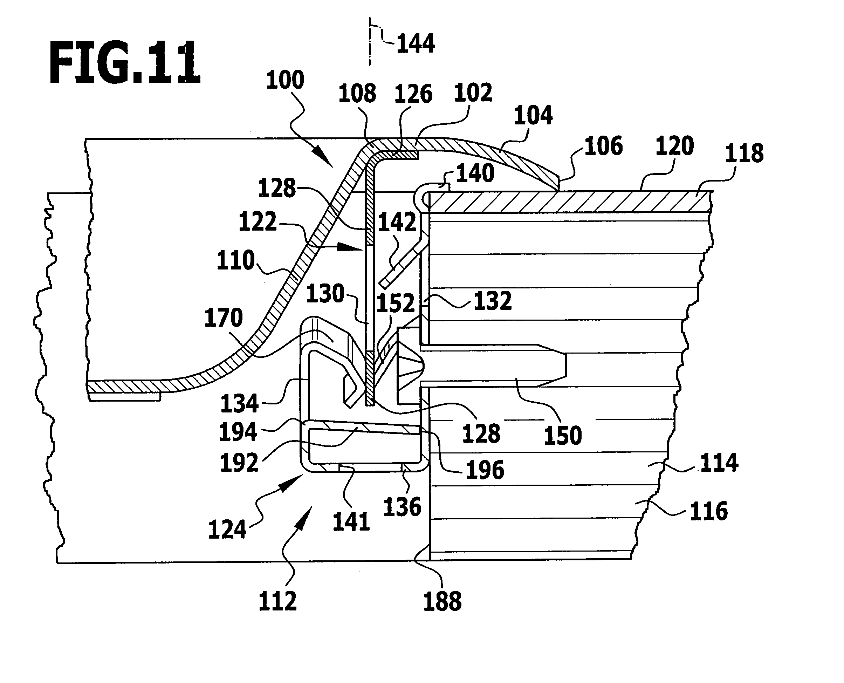

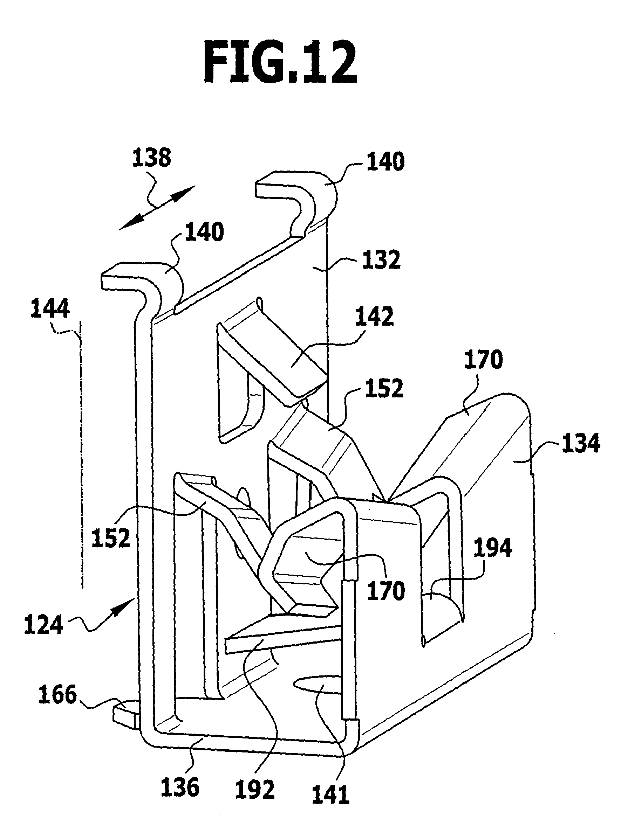

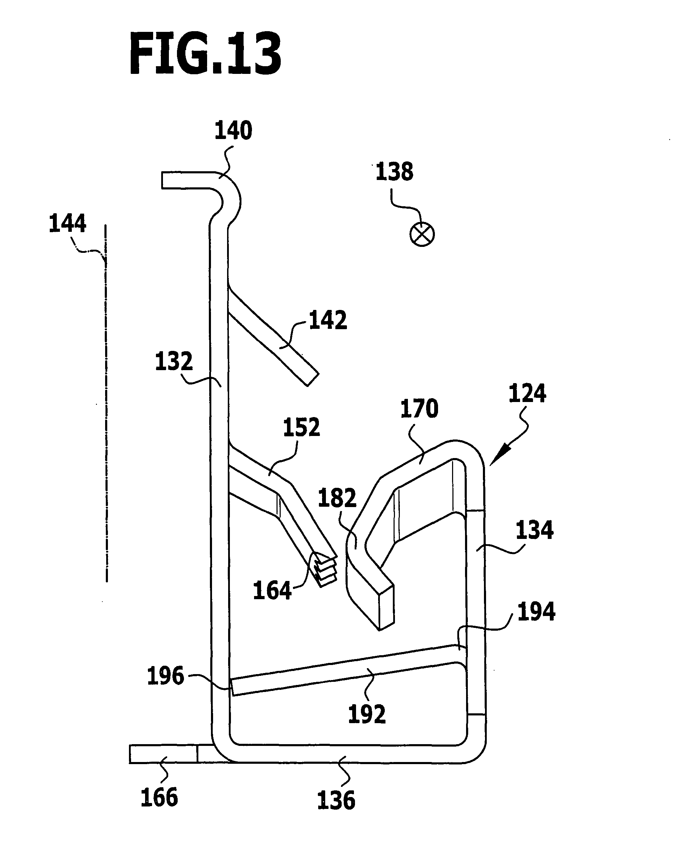

Eine in den Fig. 11 bis 15 dargestellte zweite Ausführungsform einer Halterung für eine Spüle 100 in einer Aufnahmeöffnung 112 einer Arbeitsplatte 114 unterscheidet sich von der vorstehend beschriebenen ersten Ausführungsform dadurch, dass das arbeitsplattenseitige Halteelement 124 bei der zweiten Ausführungsform mit einer zwischen den beiden Andrücklaschen 170 angeordneten Demontagelasche 192 versehen ist, welche längs einer im wesentlichen horizontal verlaufenden Abkantung 194 in den Andrückschenkel 134 des arbeitsplattenseitigen Halteelements 124 übergeht und sich von dieser Abkantung 194 aus unter einem Winkel von beispielsweise ungefähr 70° bis ungefähr 80° gegen die Vertikale 144 schräg nach unten zu dem Halteschenkel 132 hin erstreckt und an einem unteren Rand 196 endet, welcher den Halteschenkel 132 nahezu berührt.

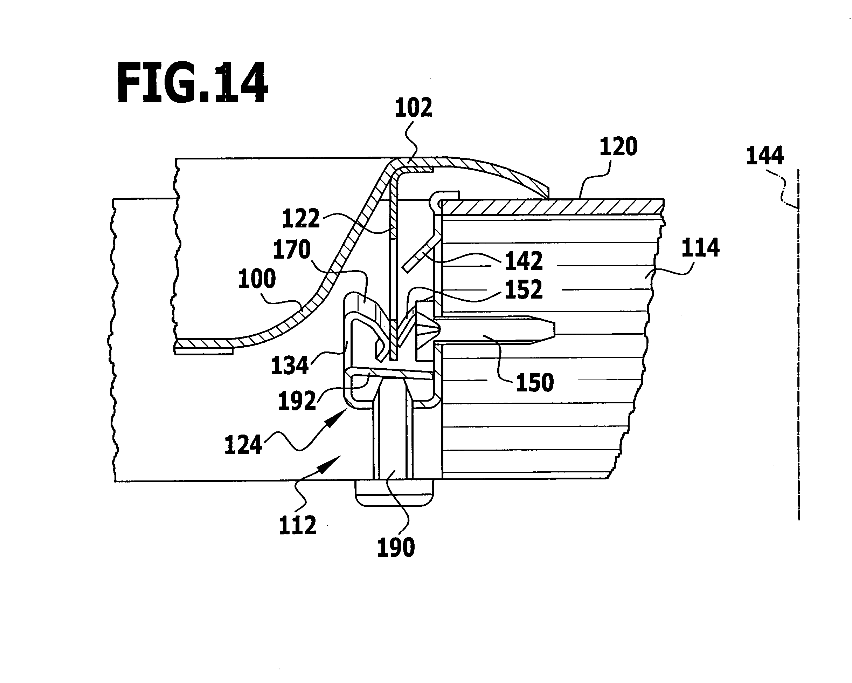

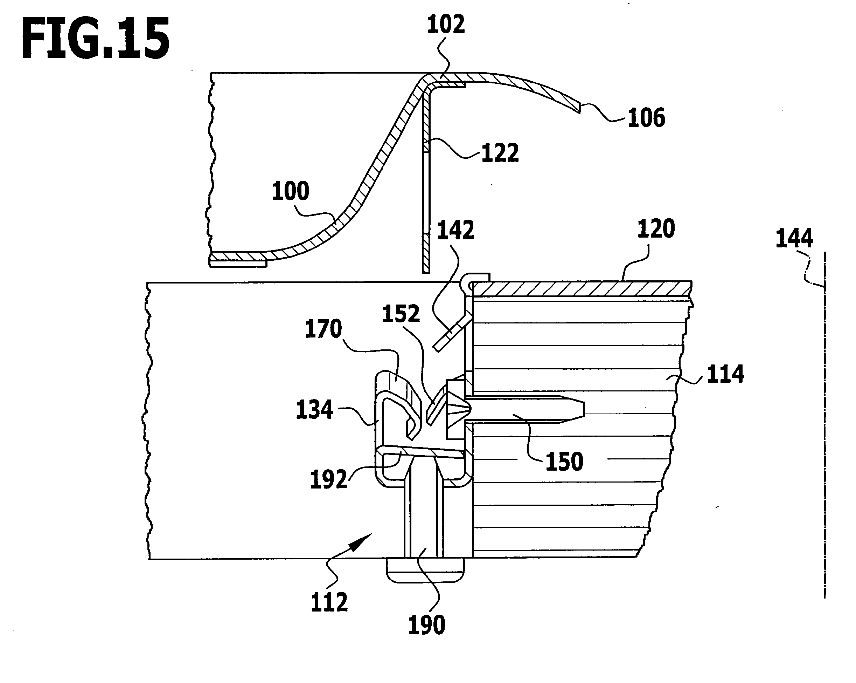

Diese Demontagelasche 192 dient dazu, bei der in den Fig. 14 und 15 dargestellten Demontage der Spüle 100 die Andrücklaschen 170 des arbeitsplattenseitigen Halteelements 124 aufzuspreizen.

Wie aus Fig. 14 zu ersehen ist, wird zu diesem Zweck eine Demontageschraube 190 durch das Demontageloch 141 im Steg 136 des arbeitsplattenseitigen Halteelements 124 hindurch in den Raum zwischen dem Halteschenkel 132, dem Andrückschenkel 134 und der über dem Demontageloch 141 angeordneten Demontagelasche 192 eingeführt.

Wenn die Demontageschraube 190 aus der in Fig. 14 dargestellten Position weiter vertikal nach oben bewegt wird, so wird hierdurch die Demontagelasche 192 nach oben verschwenkt, wodurch ihr freier Rand 196 in Kontakt mit dem Halteschenkel 132 kommt, so dass sich die Demontagelasche 192 bei ihrer weiteren Verschwenkung an dem Halteschenkel 132 abstützt, was eine Verschwenkung des Andrückschenkels 134 von der Arbeitsplatte 114 und von dem Haltebereich 128 des spülenseitigen Halteelements 122 weg zur Folge hat, so dass sich der Spalt zwischen den Andrücklaschen 170 und den jeweils gegenüberliegenden Rückhaltelaschen 152 des arbeitsplattenseitigen Halteelements 124 vergrößert und der Haltebereich 128 des spülenseitigen Halteelements 122 von den Haltezähnen 162 der Rückhaltelaschen 152 freikommt.

Der Kopf der Befestigungsschraube 150 dient dabei als Anschlag für die Verschwenkbewegung der Demontagelasche 192.

Nachdem auf diese Weise die Haltebereiche 128 aller spülenseitigen Halteelemente 122 von den arbeitsplattenseitigen Halteelementen 124 gelöst worden sind, kann die Spüle 100 ohne weiteres vertikal nach oben aus der Aufnahmeöffnung 112 der Arbeitsplatte 114 entnommen werden (siehe Fig. 15).

Auch bei dieser zweiten Ausführungsform ist eine darauffolgende erneute Montage der Spüle 100 an der Arbeitsplatte 114 unter Verwendung derselben spülenseitigen Halteelemente 122 und arbeitsplattenseitigen Halteelemente 124 ohne weiteres möglich, da die Demontage der Spüle 100 keinerlei Beschädigung der spülenseitigen Halteelemente 122 oder der arbeitsplattenseitigen Halteelemente 124 zur Folge hat.

Für die Montage der Spüle 100 an der Arbeitsplatte 114 ergibt sich durch das Vorhandensein der Demontagelasche 192 keine Änderung.

Im übrigen stimmt somit die in den Fig. 11 bis 15 dargestellte zweite Ausführungsform einer Halterung der Spüle 100 an der Arbeitsplatte 114 hinsichtlich Aufbau und Funktion mit der in den Fig. 1 bis 10 dargestellten ersten Ausführungsform überein, auf deren vorstehende Beschreibung insoweit Bezug genommen wird.

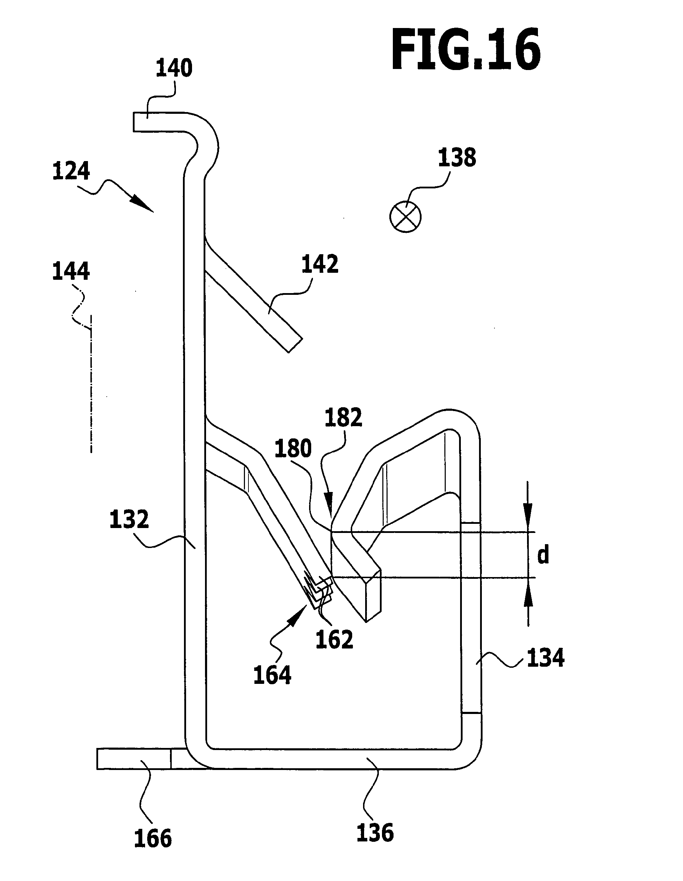

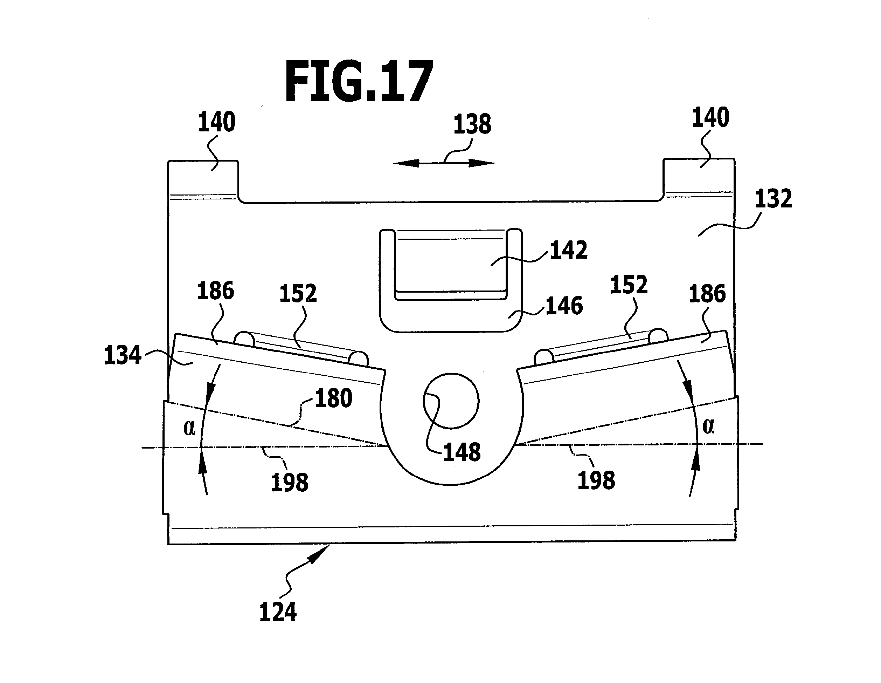

Eine in den Fig. 16 bis 18 dargestellte dritte Ausführungsform einer Halterung der Spüle 100 an der Arbeitsplatte 114 unterscheidet sich von der vorstehend beschriebenen ersten Ausführungsform dadurch, dass das Andrückelement 182 und das Rückhalteelement 164 einander im montierten Zustand der Halterung nicht genau gegenüberstehen, sondern dass vielmehr das Andrückelement 182 im montierten Zustand der Halterung in vertikaler Richtung um eine

Strecke d (siehe Fig. 16) gegenüber dem Rückhalteelement 164 nach oben versetzt angeordnet ist.

Da das Andrückelement 182 durch eine Abkantung 180 gebildet ist und das Rückhalteelement 164 durch eine Reihe von Haltezähnen 162 gebildet ist, entspricht der vertikale Abstand d zwischen dem Andrückelement 182 und dem Rückhalteelement 164 dem vertikalen Abstand zwischen der Abkantung 180 einerseits und den Enden der Haltezähne 162 des Rückhalteelements 164 andererseits.

Dieser Abstand d liegt vorzugsweise im Bereich von ungefähr 0,5 mm bis ungefähr 5 mm, insbesondere im Bereich von ungefähr 0,7 mm bis 1,7 mm.

Wird bei der Montage der Einbauspüle der Haltebereich 128 des spülenseitigen Halteelements 122 zwischen das Andrückelement 182 und das Rückhalteelement 164 eingeschoben, so graben sich die Haltezähne 162 des Rückhalteelements 164 in den Haltebereich 128 ein, während die Abkantung 180 des Andrückelements 182 den Haltebereich 128 des spülenseitigen Halteelements 122 gegen das Rückhalteelement 164 drückt.

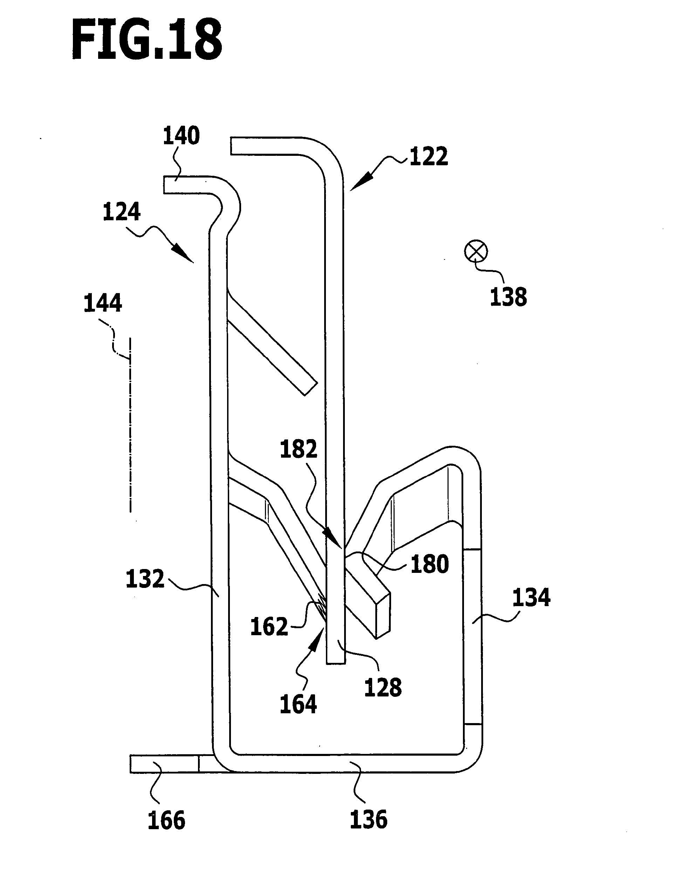

Da sich der Haltebereich 128 des spülenseitigen Halteelements 122 beim Einschieben an die versetzte Anordnung des Andrückelements 182 und des Rückhalteelements 164 anpassen muss, verbiegt sich der Haltebereich 128 geringfügig (im Maßstab der Fig. 18 nicht sichtbar), und die Rückhaltekraft, welche überwunden werden muss, um den Haltebereich 128 aus dem arbeitsplattenseitigen Halteelement 124 herauszubewegen, wird durch das Kniehebelprinzip deutlich erhöht.

Ferner verlaufen die Abkantungen 180 beider Andrückelemente 182 und die Reihen von Haltezähnen 162 beider Rückhalteelemente 164 des arbeitsplattenseitigen Halteelements 124 schräg, nämlich unter einem Winkel α von vorzugsweise ungefähr 5° bis ungefähr 45°, insbesondere unter einem Winkel α von ungefähr 10°, zur Horizontalen 198. Durch diese Schrägstellung der beiden Zahnreihen und der beiden Abkantungen 180 werden jeweils stabile Anlagefläche für den Haltebereich 128 des spülenseitigen Halteelements 122 geschaffen, wodurch ein Abknicken des spülenseitigen Halteelements 122 bei der Montage und/oder bei der Demontage der Spüle 100 verhindert wird.

Im übrigen stimmt die in den Fig. 16 bis 18 dargestellte dritte Ausführungsform einer Halterung der Spüle 100 an der Arbeitsplatte 114 hinsichtlich Aufbau und Funktion mit der in Fig. 1 bis 10 dargestellten ersten Ausführungsform überein, auf deren vorstehende Beschreibung insoweit Bezug genommen wird.

## Patentansprüche

1. Halterung zum Halten eines Einbaugeräts, insbesondere einer Spüle (100), an einer Arbeitsplatte (114), umfassend ein einbaugeräteseitiges Halteelement (122) und ein arbeitsplattenseitiges Halteelement (124),
wobei das einbaugeräteseitige Halteelement (122) und das arbeitsplattenseitige Halteelement (124) im montierten Zustand des Einbaugeräts miteinander zusammenwirken, um das Einbaugerät an der Arbeitsplatte (114) zu halten, und wobei das einbaugeräteseitige Halteelement (122) einen Haltebereich (128) mit mindestens einer Rückhaltestelle umfasst, an welcher das arbeitsplattenseitige Halteelement (124) im montierten Zustand des Einbaugeräts angreifen kann, um das einbaugeräteseitige Halteelement (122) in einer Rückhaltestellung zurückzuhalten,
**dadurch gekennzeichnet,**
**dass** der Haltebereich (128) des einbaugeräteseitigen Halteelements (122) eine Vielzahl von möglichen Rückhaltestellen umfasst, welche an dem Haltebereich (128) in unterschiedlichen, stufenlos aufeinanderfolgenden Höhenpositionen angeordnet sind.

2. Halterung nach Anspruch 1, **dadurch gekennzeichnet, dass** der Haltebereich (128) keine mit dem arbeitsplattenseitigen Halteelement (124) verrastbare Rastmittel aufweist.

3. Halterung nach einem der Ansprüche 1 oder 2, **dadurch gekennzeichnet, dass** der Haltebereich (128) eine im wesentlichen glatte Oberfläche aufweist.

4. Halterung nach einem der Ansprüche 1 bis 3, **dadurch gekennzeichnet, dass** der Haltebereich (128) im montierten Zustand des Einbaugeräts zumindest abschnittsweise im wesentlichen vertikal ausgerichtet ist.

5. Halterung nach einem der Ansprüche 1 bis 4, **dadurch gekennzeichnet, dass** der Haltebereich (128) ein duktiles metallisches Material umfasst.

6. Halterung nach einem der Ansprüche 1 bis 5, **dadurch gekennzeichnet, dass** das einbaugeräteseitige Halteelement (122) an einem Randbereich (102) des Einbaugeräts festgelegt ist.

7. Halterung nach einem der Ansprüche 1 bis 6, **dadurch gekennzeichnet, dass** das einbaugeräteseitige Halteelement (122) einstückig ausgebildet ist.

8. Halterung nach einem der Ansprüche 1 bis 7, **dadurch gekennzeichnet, dass** das arbeitsplattenseitige Halteelement (124) mindestens ein Rückhalteelement (164) umfasst, das sich im montierten Zustand des Einbaugeräts in den Haltebereich (128) eingräbt.

9. Halterung nach Anspruch 8, **dadurch gekennzeichnet, dass** das Rückhalteelement (164) mindestens einen Haltezahn (162) umfasst.

10. Halterung nach einem der Ansprüche 8 oder 9, **dadurch gekennzeichnet, dass** das Rückhalteelement (164) eine zu dem Haltebereich (128) hin gerichtete scharfe Kante, vorzugsweise einen zu dem Haltebereich (128) hin gerichteten Stanzgrat, aufweist.

11. Halterung nach einem der Ansprüche 8 bis 10, **dadurch gekennzeichnet, dass** das Rückhalteelement (164) im montierten Zustand des Einbaugeräts zwischen dem Haltebereich (128) des einbaugeräteseitigen Halteelements (122) und der Arbeitsplatte (114) angeordnet ist.

12. Halterung nach einem der Ansprüche 8 bis 11, **dadurch gekennzeichnet, dass** das Rückhalteelement (164) an einer Rückhaltelasche (152) angeordnet ist, die sich im montierten Zustand des Einbaugeräts schräg nach unten erstreckt.

13. Halterung nach Anspruch 12, **dadurch gekennzeichnet, dass** sich die Rückhaltelasche (152) im montierten Zustand des Einbaugeräts zumindest abschnittsweise unter einem Winkel von ungefähr 20° bis ungefähr 40° zur Vertikalen (144) nach unten erstreckt.

14. Halterung nach einem der Ansprüche 12 oder 13, **dadurch gekennzeichnet, dass** die Rückhaltelasche (152) eine Abkantung (158) aufweist, an welcher ein erster Abschnitt (154) der Rückhaltelasche (152) und ein zweiter Abschnitt (156) der Rückhaltelasche (152) ineinander übergehen,
wobei der erste Abschnitt (154) der Rückhaltelasche (152) im montierten Zustand des Einbaugeräts einen kleineren Winkel mit der Vertikalen (144) einschließt als der zweite Abschnitt (156) der Rückhaltelasche (152).

15. Halterung nach Anspruch 14, **dadurch gekennzeichnet, dass** das Rückhalteelement (164) an dem ersten Abschnitt (154) der Rückhaltelasche (152) angeordnet ist.

16. Halterung nach einem der Ansprüche 8 bis 15, **dadurch gekennzeichnet, dass** das arbeitsplattenseitige Halteelement (124) mindestens ein Andrückelement (182) umfasst, das im montierten Zustand des Einbaugeräts den Haltebereich (128) des einbaugeräteseitigen Halteelements (122) gegen ein Rückhalteelement (164) des arbeitsplattenseitigen Halteelements (124) drückt.

17. Halterung nach Anspruch 16, **dadurch gekennzeichnet, dass** das Andrückelement (182) eine Abkantung (180) umfasst, mit welcher das arbeitsplattenseitige Halteelement (124) im montierten Zustand des Einbaugeräts an dem Haltebereich (128) des einbaugeräteseitigen Halteelements (122) anliegt.

18. Halterung nach einem der Ansprüche 16 oder 17, **dadurch gekennzeichnet, dass** das Andrückelement (182) im montierten Zustand des Einbaugeräts auf der der Arbeitsplatte (114) abgewandten Seite des Haltebereichs (128) des einbaugeräteseitigen Halteelements (122) angeordnet ist.

19. Halterung nach einem der Ansprüche 16 bis 18, **dadurch gekennzeichnet, dass** das Andrückelement (182) an einer Andrücklasche (170) angeordnet ist, die sich im montierten Zustand des Einbaugeräts zumindest abschnittsweise schräg nach unten erstreckt.

20. Halterung nach Anspruch 19, **dadurch gekennzeichnet, dass** die Andrücklasche (170) eine Abkantung (180) umfasst, an welcher ein erster Abschnitt (172) und ein zweiter Abschnitt (174) der Andrücklasche (170) ineinander übergehen, wobei der erste Abschnitt (172) der Andrücklasche (170) sich von der Abkantung (180) aus schräg nach unten von dem Haltebereich (128) des einbaugeräteseitigen Halteelements (122) weg erstreckt und der zweite Abschnitt (174) der Andrücklasche (170) sich von der Abkantung (180) aus schräg nach oben von dem Haltebereich (128) des einbaugeräteseitigen Halteelements (122) weg erstreckt.

21. Halterung nach Anspruch 20, **dadurch gekennzeichnet, dass** der zweite Abschnitt (174) der Andrücklasche (170) an einer weiteren Abkantung (184) in einen dritten Abschnitt (176) der Andrücklasche (170) übergeht, welcher im montierten Zustand des Einbaugeräts einen größeren Winkel mit der Vertikalen (144) einschließt als der zweite Abschnitt (174).

22. Halterung nach einem der Ansprüche 20 oder 21, **dadurch gekennzeichnet, dass** sich der zweite Abschnitt (174) der Andrücklasche (170) im montierten Zustand des Einbaugeräts zumindest abschnittsweise unter einem Winkel von ungefähr 20° bis ungefähr 40° zur Vertikalen (144) erstreckt.

23. Halterung nach einem der Ansprüche 1 bis 22, **dadurch gekennzeichnet, dass** das arbeitsplattenseitige Halteelement (124) ein Vorzentrierelement (142) zum Vorzentrieren des einbaugeräteseitigen Halteelements (122) beim Einführen in das arbeitsplattenseitige Halteelement (124) während der Montage des Einbaugeräts umfasst.

24. Halterung nach Anspruch 23, **dadurch gekennzeichnet, dass** das Vorzentrierelement (142) als eine sich im montierten Zustand des Einbaugeräts schräg nach unten erstreckende Vorzentrierlasche ausgebildet ist.

25. Halterung nach Anspruch 24, **dadurch gekennzeichnet, dass** sich die Vorzentrierlasche im montierten Zustand des Einbaugeräts zumindest abschnittsweise unter einem Winkel von ungefähr 30° bis ungefähr 60° zur Vertikalen (144) erstreckt.

26. Halterung nach einem der Ansprüche 23 bis 25, **dadurch gekennzeichnet, dass** das Vorzentrierelement (142) im montierten Zustand des Einbaugeräts zwischen dem einbaugeräteseitigen Halteelement (122) und der Arbeitsplatte (114) angeordnet ist.

27. Halterung nach einem der Ansprüche 1 bis 26, **dadurch gekennzeichnet, dass** das arbeitsplattenseitige Halteelement (124) mittels eines Demontagewerkzeugs (190), vorzugsweise zerstörungsfrei, von dem einbaugeräteseitigen Halteelement (122) lösbar ist.

28. Halterung nach Anspruch 27, **dadurch gekennzeichnet, dass** das Demontagewerkzeug (190) in direkten Kontakt mit dem einbaugeräteseitigen Halteelement (122) bringbar ist.

29. Halterung nach einem der Ansprüche 1 bis 28, **dadurch gekennzeichnet, dass** das arbeitsplattenseitige Halteelement (124) eine Demontageöffnung (141) zum Einführen eines Demontagewerkzeugs (190) aufweist.

30. Halterung nach einem der Ansprüche 1 bis 29, **dadurch gekennzeichnet, dass** das arbeitsplattenseitige Halteelement (124) eine Demontagelasche (192) umfasst, mittels welcher das arbeitsplattenseitige Halteelement (124) von dem einbaugeräteseitigen Halteelement (122) lösbar ist.

31. Halterung nach Anspruch 30, **dadurch gekennzeichnet, dass** die Demontagelasche (192) von einer Ruhestellung in eine Demontagestellung bewegbar ist und dabei einen an dem Haltebereich (128) des einbaugeräteseitigen Halteelements (122) anliegenden Bereich des arbeitsplattenseitigen Halteelements (124) von dem Haltebereich (128) weg bewegt.

32. Halterung nach einem der Ansprüche 30 oder 31, **dadurch gekennzeichnet, dass** die Halterung einen die Bewegung der Demontagelasche (192) bei der Demontage der Halterung begrenzenden Anschlag (150) aufweist.

33. Halterung nach einem der Ansprüche 1 bis 32, **dadurch gekennzeichnet, dass** das arbeitsplattenseitige Halteelement (124) einstückig ausgebildet ist.

34. Halterung nach einem der Ansprüche 1 bis 33, **dadurch gekennzeichnet, dass** das arbeitsplattenseitige Halteelement (124) einen elastischen metallischen Werkstoff umfasst.

35. Halterung nach einem der Ansprüche 1 bis 34, **dadurch gekennzeichnet, dass** das arbeitsplattenseitige Halteelement (124) mindestens ein Rückhalteelement (164) und mindestens ein Andrückelement (182) umfasst, das im montierten Zustand des Einbaugeräts den Haltebereich (128) des einbaugeräteseitigen Halteelements (122) gegen das Rückhalteelement (164) des arbeitsplattenseitigen Halteelements (124) drückt,
wobei das Andrückelement (182) und das Rückhalteelement (164) im montierten Zustand der Halterung in vertikaler Richtung gegeneinander versetzt angeordnet sind.

36. Halterung nach Anspruch 35, **dadurch gekennzeichnet, dass** das Andrückelement (182) und das Rückhalteelement (164) im montierten Zustand der Halterung in vertikaler Richtung um mindestens 0,5 mm gegeneinander versetzt angeordnet sind.

37. Halterung nach einem der Ansprüche 35 oder 36, **dadurch gekennzeichnet, dass** das Andrückelement (182) und das Rückhalteelement (164) im montierten Zustand der Halterung in vertikaler Richtung um höchstens 5 mm gegeneinander versetzt angeordnet sind.

38. Halterung nach einem der Ansprüche 35 bis 37, **dadurch gekennzeichnet, dass** das Andrückelement (182) im montierten Zustand der Halterung oberhalb des Rückhalteelements (164) angeordnet ist.

39. Halterung nach einem der Ansprüche 35 bis 38, **dadurch gekennzeichnet, dass** das Andrückelement (182) eine Abkantung (180) umfasst, mit welcher das arbeitsplattenseitige Halteelement (124) im montierten Zustand des Einbaugeräts an dem Haltebereich (128) des einbaugeräteseitigen Halteelements (122) anliegt, und dass das Rückhalteelement (164) eine Reihe von Haltezähnen (162) umfasst.

40. Halterung nach Anspruch 39, **dadurch gekennzeichnet, dass** die Abkantung (180) und die Reihe von Haltezähnen (162) im montierten Zustand der Halterung in vertikaler Richtung gegeneinander versetzt angeordnet sind.

41. Halterung nach einem der Ansprüche 1 bis 40, **dadurch gekennzeichnet, dass** das arbeitsplattenseitige Halteelement (124) mindestens ein Rückhalteelement (164) umfasst, das im montierten Zustand des Einbaugeräts schräg zur Horizontalen, vorzugsweise unter einem Winkel (α) von ungefähr 5° bis ungefähr 45° zur Horizontalen, verläuft.

42. Halterung nach einem der Ansprüche 8 bis 22 oder 35 bis 41, **dadurch gekennzeichnet, dass** das arbeitsplattenseitige Halteelement (124) mindestens ein Andrückelement (182) umfasst, das im montierten Zustand des Einbaugeräts den Haltebereich (128) des einbaugeräteseitigen Halteelements (122) gegen ein Rückhalteelement (164) des arbeitsplattenseitigen Halteelements (124) drückt, wobei das Andrückelement (182) im eingebauten Zustand des Einbaugeräts schräg zur Horizontalen, vorzugsweise unter einem Winkel (α) von ungefähr 5° bis ungefähr 45° zur Horizontalen, verläuft.

43. Halterung zum Halten eines Einbaugeräts, insbesondere einer Spüle (100), an einer Arbeitsplatte (114), umfassend ein einbaugeräteseitiges Halteelement (122) und ein arbeitsplattenseitiges Halteelement (124),
wobei das einbaugeräteseitige halteelement (122) und das arbeitsplattenseitige Halteelement (124) im montierten Zustand des Einbaugeräts miteinander zusammenwirken, um das Einbaugerät an der Arbeitsplatte (114) zu halten, und wobei das einbaugeräteseitige Halteelement (122) einen Haltebereich (128) mit mindestens einer Rückhaltestelle umfasst, an welcher das arbeitsplattenseitige Halteelement (124) im montierten Zustand des Einbaugeräts angreifen kann, um das einbaugeräteseitige Halteelement (122) in einer Rückhaltestellung zurückzuhalten,
**dadurch gekennzeichnet, dass**
das arbeitsplattenseitige Halteelement (124) mindestens ein Rückhalteelement (164) und mindestens ein Andrückelement (182) umfasst, das im montierten Zustand des Einbaugeräts den Haltebereich (128) des einbaugeräteseitgen Halteelements (122) gegen das Rückhalteelement (164) des arbeitsplattenseitigen Halteelements (124) drückt,
wobei das Andrückelement (182) und das Rückhalteelement (164) im montierten Zustand der Halterung in vertikaler Richtung gegeneinander versetzt angeordnet sind.

44. Kombination aus einem Einbaugerät, insbesondere einer Spüle, und mindestens einer Halterung nach einem der Ansprüche 1 bis 43.
